# EUROPEAN PATENT APPLICATION

(11) **EP 3 935 955 A1**
(43) Date of publication of application: **12.01.2022**
(21) Application number: 20765723.0
(22) Date of filing: 02.03.2020
(51) Int. Cl.: A23L 2/00, A23L 2/52

(54) **CARBONATED BEVERAGE**

(30) Priority: 07.03.2019 JP 2019041831
(71) Applicant: Suntory Holdings Limited, Osaka 530-8203 (JP)
(72) Inventor: MATSUBAYASHI, Hideki, Kawasaki-shi, Kanagawa 211-0067 (JP); NAKATA, Aki, Kawasaki-shi, Kanagawa 211-0067 (JP)
(74) Representative: Vossius & Partner Patentanwälte Rechtsanwälte mbB
(86) International application number: PCT/JP2020/008575
(87) International publication number: WO 2020/179721

(57) **Abstract**

An object of the present invention is to provide a carbonated beverage having enhanced carbonation sensation.

1-Deoxynojirimycin is incorporated in a carbonated beverage in an amount of from 0.10 to 2.0 mg/100 mL.

## Description

### TECHNICAL FIELD

The present invention relates to a carbonated beverage, and more particularly to a carbonated beverage having enhanced carbonation sensation and comprising a specified amount of 1-deoxynojirimycin.

### BACKGROUND ART

Carbonated beverages are available for consumers to enjoy the characteristic "carbonation sensation" which is not shared by other soft drinks. Thus, retaining a carbonation sensation is important from the viewpoint of aroma, but there are cases where the carbonation sensation may be decreased due to sterilization, during storage, or after opening. Therefore, various techniques have been proposed to enhance a carbonation sensation -- for example, a technique of adding a component(s) derived from a citrus plant extract, and a technique of adding a pungent ingredient (PTLs 1, 2).

Meanwhile, 1-deoxynojirimycin is an iminosugar found in mulberry leaves or other plants, and is reported to be capable of suppressing the elevation of blood glucose levels. It is known that sugar-mimic alkanoids such as 1-deoxynojirimycin have a disadvantage in that when they are added to foods and beverages, they may deteriorate the flavor of the foods and beverages (PTL 3). However, there is no report regarding a carbonated beverage that incorporates 1-deoxynojirimycin or a mulberry leaf extract.

### CITATION LIST

### PATENT LITERATURES

PTL 1: Japanese Unexamined Patent Application Publication No. JP 2015-47148
PTL 2: Japanese Unexamined Patent Application Publication No. JP 2010-68749
PTL 3: Japanese Unexamined Patent Application Publication No. JP H09-140351

### SUMMARY OF INVENTION

### TECHNICAL PROBLEM

An object of the present invention is to provide a carbonated beverage having enhanced carbonation sensation.

### SOLUTION TO PROBLEM

The present inventors have made intensive studies to achieve the aforementioned object and, as a result, found that a specified amount of 1-deoxynojirimycin has a superior effect in enhancing the carbonation sensation of a carbonated beverage. Thus, the inventors have completed the present invention. As referred to herein, the "carbonation sensation" refers to a stimulation perceived through a sense of pressure or pain on the tongue caused by carbon dioxide gas bubbles upon drinking of a carbonated beverage (hereinafter also referred to as "carbon dioxide stimulation"). This invention is directed, but not limited, to the following.
[1] A carbonated beverage having a 1-deoxynojirimycin content of from 0.10 to 2.0 mg/100 mL.
[2] The carbonated beverage as set forth in [1], wherein the carbonated beverage is a packaged beverage having a carbon dioxide gas pressure of not less than 1.0 kgf/cm².
[3] The carbonated beverage as set forth in [1] or [2], wherein the carbonated beverage has a 1-deoxynojirimycin content of not more than 1.5 mg/100 mL.
[4] A method for enhancing the carbonation sensation of a carbonated beverage, the method comprising controlling the 1-deoxynojirimycin content of the carbonated beverage to be within the range of from 0.1 to 2.0 mg/100 mL.

### ADVANTAGEOUS EFFECTS OF INVENTION

The present invention enhances the carbonation sensation of a carbonated beverage. Also, this invention makes it possible to provide a carbonated beverage having high palatability induced by carbon dioxide stimulation, which is storable at ordinary temperatures for a long period of time.

The detailed reason why the present invention enhances the carbonation sensation of a carbonated beverage has not been identified. Although this invention is not bound by the following theory, it is considered that when a specified amount of 1-deoxynojirimycin is added to a carbonated beverage, the coarse aftertaste of 1-deoxynojirimycin gives a stimulus to the tongue thereby enhancing a carbonation sensation.

### DESCRIPTION OF EMBODIMENTS

One embodiment of the present invention is directed to a carbonated beverage having a 1-deoxynojirimycin content of from 0.1 to 2.0 mg/100 mL.

### (Carbonated beverage)

As referred to herein, the "carbonated beverage" refers to a beverage containing carbon dioxide gas (carbon dioxide). Carbon dioxide gas can be added to a beverage using a method commonly known to skilled artisans. Examples of such commonly known methods include, but are not limited to, the following: carbon dioxide may be dissolved in a beverage under pressure; carbon dioxide and a beverage may be mixed in piping using a mixer such as a carbonator; a beverage may be sprayed into a tank filled with carbon dioxide to cause the beverage to absorb carbon dioxide; or a beverage may be mixed with carbonated water.

The carbon dioxide gas pressure in the carbonated beverage of the present invention is not particularly limited, and can be for example in the range of from 1.0 to 5.0 kgf/cm², preferably from 1.5 to 4.8 kgf/cm², more preferably from 2.0 to 4.5 kgf/cm², at a temperature of 20°C. In this invention, the carbon dioxide gas pressure in the carbonated beverage can be measured using GVA-500A, a gas volume analyzer produced by Kyoto Electronics Manufacturing Co., Ltd. With the sample temperature being adjusted to 20°C, a packaged beverage placed in the aforementioned gas volume analyzer is subjected to gas venting (snifting) and shaking, and then measured for carbon dioxide gas pressure.

The carbonated beverage of the present invention is exemplified by, but not limited to, non-alcoholic and alcoholic beverages, but is preferably a non-alcoholic beverage. Examples of the carbonated beverage of this invention include, but are not particularly limited to, carbonated beverages prepared by adding a flavoring of lemon lime, lime, orange, grapefruit, grape or the like to carbonated water (*e*.*g*., soda pop and lemon lime soda); cola-containing beverages; ginger ale; fruit juice-containing carbonated beverages; and milk-containing carbonated beverages.

### (1-Deoxynojirimycin)

The present invention is characterized by enhancing the carbonation sensation of a carbonated beverage by use of 1-deoxynojirimycin. As referred to above, 1-deoxynojirimycin, which is an iminosugar found in mulberry leaves or the like, is also called moranoline or 1,5-dideoxy-1,5-imino-D-glucitol, and is assigned CAS Registry No. 19130-96-2.

The carbonated beverage of the present invention contains from 0.10 to 2.0 mg/100 mL of 1-deoxynojirimycin. When the carbonated beverage of this invention has a 1-deoxynojirimycin content of not less than 0.10 mg/100 mL, the carbonation sensation of the carbonated beverage can be effectively enhanced leading to improvement of carbon dioxide stimulation. The carbonated beverage of this invention has a 1 -deoxynojirimycin content of preferably not less than 0.15 mg/100 mL, more preferably not less than 0.20 mg/100 mL.

It is known that sugar-mimic alkaloids such as 1-deoxynojirimycin have a disadvantage in that when they are added to foods and beverages, they may deteriorate the flavor of the foods and beverages (refer to paragraph [0003] of PTL 3). The present inventors found that carbonated beverages containing high concentrations of 1-deoxynojirimycin are more likely to leave an unpleasant aftertaste in the latter half of drinking time. As referred to herein, the "unpleasant aftertaste" refers to a coarse feeling on the tongue (hereinafter also referred to as "harsh aftertaste"). The harsh aftertaste of 1-deoxynojirimycin may impair the intended effect of the present invention, or namely the palatability of a carbonated beverage having enhanced carbonation sensation. Therefore, from the viewpoint that the beverage gives an excellent clean sensation in the mouth and hardly leaves an unpleasant aftertaste, the upper limit of the 1-deoxynojirimycin content of the carbonated beverage of this invention is 2.0 mg/100 mL. The carbonated beverage of this invention has a 1-deoxynojirimycin content of preferably not more than 1.5 mg/100 mL, more preferably not more than 1.0 mg/100 mL. The 1-deoxynojirimycin content in the beverage can be measured by using, for example, high-performance liquid chromatography (HPLC).

The 1-deoxynojirimycin used in the present invention is not limited to those extracted or isolated from a mulberry plant or other plants. Substances produced by chemical synthesis or fermentation, or products produced by bacteria may also be used. Examples of commercially available products of 1-deoxynojirimycin include the product sold by FUJIFILM Wako Pure Chemical Corporation.

In the present invention, 1-deoxynojirimycin can be used in the form of a plant extract from a mulberry plant or other plants. Examples of mulberry plants that can be used include *Morus bombycis* Koidzumi, *Morus alba* L., *Morus australis* Poir, *Morus latifolia* Poir., *Morus mongolica* Schneid, *Morus nigra* L., *Morus rubra* L., and *Morus boninensis* Koidzumi, and any hybrids or variants thereof can also be used. The site of the plant to be used is not limited in any way -- leaves, branches, sprouts, barks, trunks, roots, root barks, flowers, syncarps and the like can be used. Examples of mulberry plant extracts include, but are not limited to, the mulberry leaf extract powder, sterilized mulberry leaf powder and the like produced by Toyotama Healthy Food Co., Ltd.

In the case of using a plant extract, it is preferable to use a plant extract with increased concentration of 1-deoxynojirimycin, in order to ensure that the action and effect of the present invention can be effectively obtained and that the palatability of the carbonated beverage is not impaired. The following presents an exemplary method for obtaining a mulberry leaf extract containing 1-deoxynojirimycin. First, an alcohol such as hydrous ethanol is added to a dry product of mulberry leaves to obtain an extract. Since 1-deoxynojirimycin is present only at low concentrations (about 0.1-0.2% by weight) in dry mulberry leaves, extraction with an alcohol is preferred to achieve efficient extraction. The obtained liquid extract is treated in a centrifuge to remove insolubles, and is then vacuum concentrated to obtain a mulberry leaf extract. The thus-obtained mulberry leaf extract generally contains 1-deoxynojirimycin at a concentration of from 0.4 to 1% by weight.

### (Other components)

Similarly to common beverages, the carbonated beverage of the present invention may have different additives added thereto to the extent that they do not impair the effects of this invention. Examples of different additives include, but are not limited to, flavorings, sugars (*e.g.,* glucose, fructose, sucrose), sweeteners, acidulants, enrichments (e.g., vitamins), antioxidants, emulsifiers, preservatives, fruit juices, essences, dietary fibers, pH adjustors, and quality stabilizers. The pH of the carbonated beverage of this invention is preferably in the range of from pH 2.0 to 8.0, more preferably from pH 2.5 to 7.0, still more preferably from pH 3.0 to 6.0, from the viewpoints of aroma and storage stability.

### (Packaged beverage)

The carbonated beverage of the present invention can be made into a packaged beverage. It is advantageous to provide the carbonated beverage as a packaged beverage since the packaged beverage can be stably stored for a long period of time. The package used to make a packaged beverage is not particularly limited, and can be any of commonly used packages, such as metal package, resin package, glass package, and paper package. Specific examples thereof include metal packages such as aluminum and steel cans, resin packages such as PET bottle, glass packages such as glass bottle, and paper packages combined with metallic foils or plastic films. The volume of the carbonated beverage of this invention is not particularly limited, and is for example in the range of from 100 mL to 3000 mL, preferably from 280 mL to 2000 mL, more preferably from 400 mL to 1100 mL.

The carbonated beverage of the present invention may or may not be heat sterilized, but is preferably heat sterilized. When the carbonated beverage of this invention is heat sterilized, the heat sterilization method is not particularly limited, and any known method can be used. The heat sterilized, packaged beverage can be produced by, for example, a method that involves performing heat sterilization after a carbonated beverage or a pre-carbonated beverage is packed in a package, or a method that involves subjecting a pre-carbonated beverage to heat sterilization, followed by packaging. To be more specific, when the carbonated beverage of this invention is made into a packaged beverage such as PET bottled beverage, paper-packed beverage, glass bottled beverage, or pouched beverage, the carbonated beverage can be subjected to FP or UHT sterilization in which the beverage is held for example at 65 to 130°C, preferably at 85 to 120°C, for 1 to 60 seconds. Heat sterilization may be performed for a period of from 10 to 40 minutes. Any sterilization process may be performed at an appropriate temperature for several seconds, such as 5 to 30 seconds, as long as such a process can achieve a comparable sterilizing value to that process conducted under the aforementioned conditions. When the carbonated beverage of this invention is made into a packaged beverage, a hot pack filling method or an aseptic filling method can be used.

### EXAMPLES

Hereunder, the present invention will be specifically described in detail by reference to experimental examples, but this invention is not limited to these examples. Unless otherwise stated herein, all numerical ranges are inclusive of their endpoints.

### <Analysis of 1-deoxynojirimycin>

The 1-deoxynojirimycin content in different carbonated beverages was analyzed using HPLC (high-performance liquid chromatography). The samples were vacuum concentrated, if necessary, before analysis.

### (HPLC analysis conditions)

- Column: TSKgel Amide-80, ϕ4.6 mm × 250 mm, particle size 5 µm
- Mobile phase: Mixed solution of water, acetonitrile and acetic acid
- Flow rate: 1.0 mL/min.
- Column temperature: 40°C
- Ionization method: Electrospray ionization (positive ion detection mode)
- Mass-to-change ratio (m/z): 164.0 → 109.9

### Experiment 1: Preparation and evaluation of carbonated beverages (1)

Different carbonated beverages were prepared by adding 1-deoxynojirimycin and adjusting the carbon dioxide gas pressure to 3.6 kgf/cm². The 1-deoxynojirimycin used was a synthetic product (produced by FUJIFILM Wako Pure Chemical Corporation; purity 98%). 1-Deoxynojirimycin was added so as to ensure that the different beverages had such 1-deoxynojirimycin contents as shown in the table given below. The beverages had a pH of about 4.5, and were packed in PET bottles (volume: 500 mL).

The prepared carbonated beverages were evaluated by three panelists in the five-point scale from 1 to 5 points. As a control for comparison with the working examples, a comparative example (sample No. 1-1) prepared with no addition of 1-deoxynojirimycin was also evaluated. The ratings given by each panelist based on the criteria detailed below were discussed again in a free-form manner among all the panelists, and the final ratings were assigned as integer values in consensus among them.
- 5 points: The carbonation sensation is significantly enhanced as compared to the control
- 4 points: The carbonation sensation is enhanced as compared to the control
- 3 points: The carbonation sensation is enhanced to some degree as compared to the control
- 2 points: The carbonation sensation is almost not enhanced as compared to the control
- 1 point: The carbonation sensation is not enhanced at all as compared to the control

The results of the sensory evaluation are shown in Table 1. As evident from the table, when 1-deoxynojirimycin was added in an amount of not less than 0.1 mg, preferably not less than 0.17 mg, per 100 mL of the carbonated beverage, the carbonation sensation of the carbonated beverages was enhanced successfully.

In Sample No. 1-12, which had a 1-deoxynojirimycin content of 3.0 mg/100 mL, enhancement of carbonation sensation was observed, but the coarse, harsh aftertaste of 1-deoxynojirimycin lingering on the tongue was felt so that the palatability of the carbonated beverage was impaired.

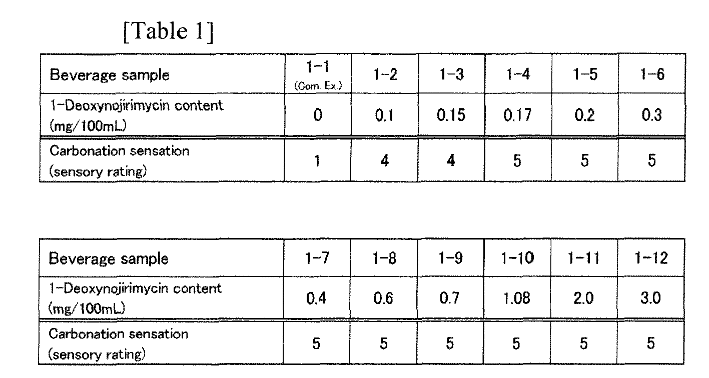

### Experiment 2: Preparation and evaluation of carbonated beverages (2)

Different packaged carbonated beverages were prepared by the same procedure as in Experiment 1. Carbon dioxide gas pressure and 1-deoxynojirimycin content were adjusted to such values as shown in the table given below.

As controls, comparative examples (sample Nos. 2-1, 2-3 and 2-7) were prepared with the same carbon dioxide gas pressures as those of the samples prepared above but with no addition of 1-deoxynojirimycin. The samples prepared above were all subjected to sensory evaluation by the same procedure as in Experiment 1.

As shown in the table given below, the carbonation sensation of the carbonated beverages was enhanced by addition of 1-deoxynojirimycin. Enhancement of carbonation sensation was possible merely by adopting the simple approach of adding 1-deoxynojirimycin to carbonated beverages. In Sample No. 2-12, which had a 1-deoxynojirimycin content of 3.0 mg/100 mL, enhancement of carbonation sensation was observed, but the coarse, harsh aftertaste of 1-deoxynojirimycin lingering on the tongue was strongly felt.

**[Table 2]**

| Beverage sample | 2-1 (Com. Ex.) | 2-2 | 2-3 (Com. Ex.) | 2-4 | 2-5 | 2-6 | 2-7 (Com. Ex.) | 2-8 | 2-9 | 2-10 |
|---|---|---|---|---|---|---|---|---|---|---|
| CO₂ gas pressure (kgf/cm²) | 1.0 | | 2.5 | | | | 5.0 | | | |
| 1-Deoxynojirimycin content (mg/100mL) | 0 | 2.0 | 0 | 0.2 | 0.4 | 1.08 | 0 | 0.1 | 2.0 | 3.0 |
| Carbonation sensation (sensory rating) | 1 | 5 | 1 | 5 | 5 | 5 | 1 | 4 | 5 | 5 |

### Experiment 3: Preparation and evaluation of carbonated beverages (3)

Different packaged carbonated beverages (sample Nos. 3-1 to 3-6) were prepared by the same procedure as in Experiment 1 except that fructose glucose syrup, citric acid and trisodium citrate were added in the amounts shown in Table 3. In the prepared carbonated beverages, the pH was adjusted to 3.6, and the carbon dioxide gas pressure was adjusted to 1.0 kgf/cm² (for sample Nos. 3-1 to 3-2), 3.6 kgf/cm² (for sample Nos. 3-3 to 3-4), or 5.0 kgf/cm² (for sample Nos. 3-5 to 3-6).

As controls, those beverage samples (sample Nos. 3-1, 3-2 and 3-5) were prepared with no addition of 1-deoxynojirimycin. The samples prepared above were all subjected to sensory evaluation by the same procedure as in Experiment 1.

The results are shown in Table 3. The carbonation sensation of the sugar and acid-containing carbonated beverages was also enhanced successfully by adding 1-deoxynojirimycin to the beverages in an amount of 0.2 mg/100 mL.

**[Table 3]**

| Beverage sample | 3-1 (Com. Ex.) | 3-2 | 3-3 (Com Ex.) | 3-4 | 3-5 (Com. Ex.) | 3-6 |
|---|---|---|---|---|---|---|
| Fructose glucose syrup (mg/100mL) | 14 | | | | | |
| Citric acid (mg/100mL) | 0.1 | | | | | |
| Trisodium citrate (mg/100mL) | 0.02 | | | | | |
| 1-Deoxynojirimycin (mg/100mL) | 0 | 0.2 | 0 | 0.2 | 0 | 0.2 |
| CO₂ gas pressure (kgf/cm²) | 1.0 | 1.0 | 3.6 | 3.6 | 5.0 | 5.0 |
| Carbonation sensation (sensory rating) | 1 | 4 | 1 | 5 | 1 | 5 |

## Claims

1. A carbonated beverage having a 1-deoxynojirimycin content of from 0.10 to 2.0 mg/100 mL.

2. The carbonated beverage according to claim 1, wherein the carbonated beverage is a packaged beverage having a carbon dioxide gas pressure of not less than 1.0 kgf/cm².

3. The carbonated beverage according to claim 1 or 2, wherein the carbonated beverage has a 1-deoxynojirimycin content of not more than 1.5 mg/100 mL.

4. A method for enhancing the carbonation sensation of a carbonated beverage, the method comprising controlling the 1-deoxynojirimycin content of the carbonated beverage to be within the range of from 0.1 to 2.0 mg/100 mL.
